# EUROPEAN PATENT APPLICATION

(11) **EP 3 067 875 A1**
(43) Date of publication of application: **14.09.2016**
(21) Application number: 16152543.1
(22) Date of filing: 25.01.2016
(51) Int. Cl.: G09C 1/00, H04L 9/32

(54) **MULTI-FREQUENCIES PUF BASED ELECTRONIC CIRCUIT, AUTHENTICATION SYSTEM, AND AUTHENTICATION METHOD**

(30) Priority: 12.03.2015 JP 2015049797
(71) Applicant: FUJITSU LIMITED, Kawasaki-shi, Kanagawa 211-8588 (JP)
(72) Inventor: Yamamoto, Dai, Kawasaki-shi Kanagawa 211-8588 (JP); Morikawa, Ikuya, Kawasaki-shi Kanagawa 211-8588 (JP); Takenaka, Masahiko, Kawasaki-shi Kanagawa 211-8588 (JP)
(74) Representative: Hoffmann Eitle

(57) **Abstract**

An electronic circuit includes a clock generator that generates a plurality of clock signals whose frequencies are mutually different, a plurality of RS latch circuits whose output signals change in accordance with the frequencies of the plurality of clock signals that are individually input from the clock generator, and a control circuit that controls the frequencies of the plurality of clock signals which are input from the clock generator to each of the plurality of RS latch circuits.

## Description

### FIELD

A technique disclosed in embodiments relates to an electronic device, an authentication device, and an authentication system.

### BACKGROUND

In recent years, counterfeit products (hereinafter also referred to as clone product) of products such as printer cartridges, batteries, and cartridges of game consoles have been sold. One example of the clone product of a printer cartridge is refill ink that is manufactured and sold by a third party. Sale of genuine products of printer cartridges may be influenced by sale of refill ink that is clone products of the printer cartridges. Further, sufficient quality may not be secured with clone products of batteries, and problems may occur when clone products of batteries are manufactured, sold, and used by consumers. Further, as for clone products of cartridges of game consoles, a problem is that a clone product of a cartridge of a game console is used to start game software that is illegally obtained.

It has been known that an authentication function is added to a genuine product to avoid use of a clone product. The authentication function is realized by performing encryption processing based on secret information (a secret key in encryption or the like) for assurance of a genuine product. The secret information used for the authentication function is stored in a non-volatile memory that is arranged in an IC chip. However, the secret information stored in the non-volatile memory may be read by an attack of an attacker.

One example of the attack to read the secret information is an attack that is referred to as non-invasive attack such as a side-channel attack. A side-channel attack uses leakage of side-channel information such as power consumption and compromising emanation, which are correlated with the secret information, from the IC chip during execution of encryption processing, analyzes the leaked side-channel information, and thereby identifies the secret information. Another example of the attack to read the secret information is an attack referred to as invasive attack such as probing measurement and reads the secret information by processing an IC chip on which a non-volatile memory storing the secret information is mounted and by directly probing the non-volatile memory.

In a case where the secret information is read by the attack by the attacker, the attacker may manufacture a clone product on which an IC chip having the same information as the read secret information is mounted and may sell the clone product at a low price. It is desired to avoid reading of secret information in order to avoid sale of clone products by attackers.

It has been known that a physically unclonable function (PUF) is used to realize an authentication function without storing secret information in a non-volatile memory. The PUF is used, and an authentication function is thereby realized by the PUF alone without authentication by using secret information and an encryption function. The techniques are disclosed in Japanese Laid-open Patent Publication No. 2013-46334, International Publication Pamphlet No. WO 2008/056612, Japanese Laid-open Patent Publication No. 2012-220649, Jae W. Lee et al., "A technique to build a secret key in integrated circuits with identification and authentication applications", IEEE VLSI Circuits Symposium, June 2004, Y. Su et al., "A 1.6pJ/bit 96% Stable Chip-ID Generating Circuit using Process Variations", In IEEE International Solid-State Circuits Conference (ISSCC 2007), pp. 406-407, and pp. 611, 2007, and Y. Su et al., "A Digital 1.6pJ/bit Chip Identification Circuit Using Process Variations", Solid-State Circuits, IEEE Journal 43(1), pp. 69-77, 2008.

### SUMMARY

### TECHNICAL PROBLEM

As PUFs, delay PUFs including arbiter PUFs and memory PUFs including latch PUFs have been known. The arbiter PUF outputs a response when an n-bit challenge is input. However, the latch PUF is capable of outputting n-bit output signals, but it is not easy to output responses to plural challenges. Thus, it is not easy to realize an authentication function by using the latch PUF to generate and output responses to plural challenges.

An object of one embodiment is to provide an electronic circuit that enables an authentication function that uses a latch PUF.

### SOLUTION TO PROBLEM

According to an aspect of the invention, an electronic circuit includes a clock generator that generates a plurality of clock signals whose frequencies are mutually different, a plurality of RS latch circuits whose output signals change in accordance with the frequencies of the plurality of clock signals that are individually input from the clock generator, and a control circuit that controls the frequencies of the plurality of clock signals which are input from the clock generator to each of the plurality of RS latch circuits.

### ADVANTAGEOUS EFFECTS OF INVENTION

One embodiment may provide an electronic circuit that enables an authentication function that uses a latch PUF.

### BRIEF DESCRIPTION OF DRAWINGS

FIG. 1 is a circuit block diagram of an arbiter PUF in related art;
FIG. 2 is a diagram that illustrates an authentication system that uses the arbiter PUF illustrated in FIG. 1, in which FIG. 2A is a diagram that illustrates registration of challenges and responses and FIG. 2B is a diagram that illustrates authentication by the challenges and the responses that are registered in FIG. 2A;
FIG. 3A is a circuit block diagram of an RS latch circuit, and FIG. 3B is a truth table of the RS latch circuit illustrated in FIG. 3A;
FIG. 4 is a circuit block diagram of a latch PUF in related art;
FIG. 5 is a circuit block diagram of an electronic apparatus according to an embodiment;
FIG. 6 is an internal circuit block diagram of the latch PUF illustrated in FIG. 5;
FIG. 7 is a diagram that illustrates an authentication system that uses the electronic apparatus illustrated in FIG. 5, in which FIG. 7A is a diagram that illustrates registration of challenges and responses and FIG. 7B is a diagram that illustrates authentication by the challenges and the responses that are registered in FIG. 7A;
FIG. 8 is a flowchart of authentication processing by the authentication system illustrated in FIG. 7;
FIG. 9 is a circuit block diagram of a latch PUF according to a second embodiment;
FIG. 10 is a diagram that illustrates an authentication system that uses an electronic apparatus on which the latch PUF illustrated in FIG. 9 is mounted, in which FIG. 10A is a diagram that illustrates registration of challenges and responses and FIG. 10B is a diagram that illustrates authentication by the challenges and the responses that are registered in FIG. 10A;
FIG. 11 is a flowchart of authentication processing by the authentication system illustrated in FIG. 10; and
FIG. 12 is a diagram that illustrates examples of the numbers of challenge-response pairs of the arbiter PUF illustrated in FIG. 1, the latch PUF illustrated in FIG. 4, the latch PUF illustrated in FIG. 6, and the latch PUF illustrated in FIG. 9.

### DESCRIPTION OF EMBODIMENTS

An electronic circuit, an authentication device, and an authentication system according to the present disclosure will hereinafter be described with reference to drawings. However, the technical scope of the present disclosure is not limited to the embodiments.

(Outline of electronic circuit according to an embodiment)

The electronic circuit according to the embodiment has a clock generator that generates clock signals at plural frequencies and plural RS latches in which outputs are changed in accordance with the frequencies of the input clock signals. The signals that are related to the frequencies of the clock signals input to the plural RS latches serve as challenges, and output signals of the RS latches, which change in accordance with the frequencies of the input clock signals, serve as responses, and data for an authentication function by a PUF latch are thereby generated.

(PUF and authentication function related to PUF according to the embodiment)

Prior to a description about the electronic circuit, the authentication device, and the authentication system according to the embodiment, PUFs and authentication functions related to PUFs according to the embodiment will be described in detail.

A PUF is a circuit that has a function of generating a response as second data to a challenge as first data when the challenge is input and of outputting the generated response. The PUFs that are mounted on different IC chips output mutually different responses in a case where the same challenge is input. This is because the PUF generates the response based on physical characteristics such as wire delay and element characteristics that are different for each IC chip and the response thus becomes a value specific to the IC chip.

The PUFs are categorized into delay PUFs and memory PUFs in accordance with used physical characteristics. The delay PUF decides the response mainly based on the wire delay that is delay due to wiring in the IC chip. Meanwhile, the memory PUF decides the response mainly based on the element characteristics of a memory element that is mounted on the IC chip. As described in detail below, the delay PUF is capable of forming plural challenge-response pairs that include plural challenges and responses which correspond to the plural challenges. On the other hand, because the memory PUF only has a single challenge and a single response that corresponds to the challenge, it is not easy to form plural challenge-response pairs.

### (Configuration and function of arbiter PUF)

A description will be made below about a configuration and a function of an arbiter PUF, which is one of the delay PUFs.

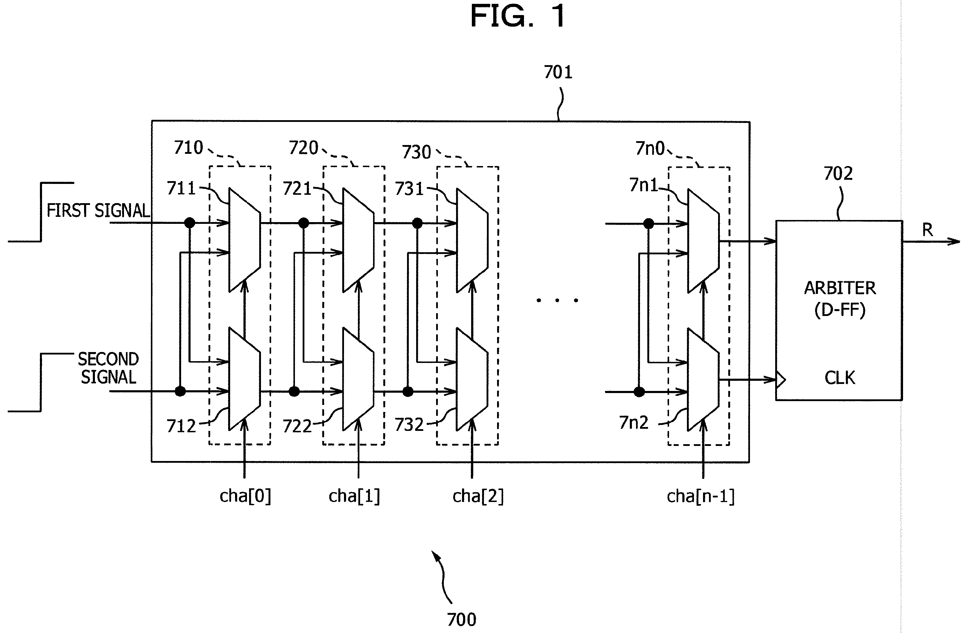

FIG. 1 is a circuit block diagram of the arbiter PUF.

The arbiter PUF 700 includes a selection unit 701 and an attributor 702. The selection unit 701 has a first selection circuit 710 to an nth selection circuit 7n0. The first selection circuit 710 has a first multiplexor 711 and a second multiplexor 712. The first multiplexor 711 and the second multiplexor 712 in the first selection circuit 710 receive inputs of a first signal and a second signal, respectively, and output mutually different signals in accordance with a first challenge cha[0]. For example, in a case where the first challenge cha[0] is "0", the first multiplexor 711 in the first selection circuit 710 outputs the first signal, and the second multiplexor 712 in the first selection circuit 710 outputs the second signal. Meanwhile, in a case where the first challenge cha[0] is "1", the first multiplexor 711 in the first selection circuit 710 outputs the second signal, and the second multiplexor 712 in the first selection circuit 710 outputs the first signal.

The second selection circuit 720 has a first multiplexor 721 and a second multiplexor 722. The first multiplexor 721 and the second multiplexor 722 in the second selection circuit 720 receive inputs of output signals of the first multiplexor 711 and the second multiplexor 712 in the first selection circuit 710, respectively, and output mutually different signals in accordance with a second challenge cha[1]. For example, in a case where the second challenge cha[1] is "0", the first multiplexor 721 in the second selection circuit 720 outputs the signal from the first multiplexor 711 in the first selection circuit 710, and the second multiplexor 722 in the second selection circuit 720 outputs the signal from the second multiplexor 712 in the first selection circuit 710. Meanwhile, in a case where the second challenge cha[1] is "1", the first multiplexor 721 in the second selection circuit 720 outputs the signal from the second multiplexor 712 in the first selection circuit 710, and the second multiplexor 722 in the second selection circuit 720 outputs the signal from the first multiplexor 711 in the first selection circuit 710. The same applies to following selection circuits, that is, each of the selection circuits, which are the third selection circuit 730 to the nth selection circuit 7n0, has two multiplexors that receive inputs of the output signals from the selection circuit in the preceding phase and output mutually different signals in accordance with an n-1th challenge cha[n-1].

The attributor 702 is a D flip-flop, in which a signal from a first multiplexor 7n1 in the nth selection circuit 7n0 is input to a D terminal and a signal from a second multiplexor 7n2 in the nth selection circuit 7n0 is input to a CK terminal. Here, the attributor 702 is a D flip-flop. However, the function of the attributor 702 may be realized by another configuration.

In the arbiter PUF 700, the output of the attributor 702 in a case where signals that simultaneously rise and transit are input as the first signal and second signal becomes different in accordance with the challenge cha[n-1:0] and the delay characteristics of a chip on which the arbiter PUF 700 is mounted. If delay times of the multiplexors that form the selection unit 701 are not different for each chip, the delay times of outputs of the input first signal and second signal from the selection unit 701 do not become different for each chip on which the arbiter PUF 700 is mounted. However, because the chips have different characteristics of transistors that form elements, different wire widths of wires that connect the transistors, and so forth, the delay times of outputs of the input first signal and second signal from the selection unit 701 become different for each chip on which the arbiter PUF 700 is mounted. The arbiter PUF 700 realizes the PUF by using a characteristic that the output signal of the attributor 702 becomes different in accordance with the challenge [n-1:1] and the chip on which the arbiter PUF 700 is mounted because the delay characteristics of the selection unit 701 are different for each chip.

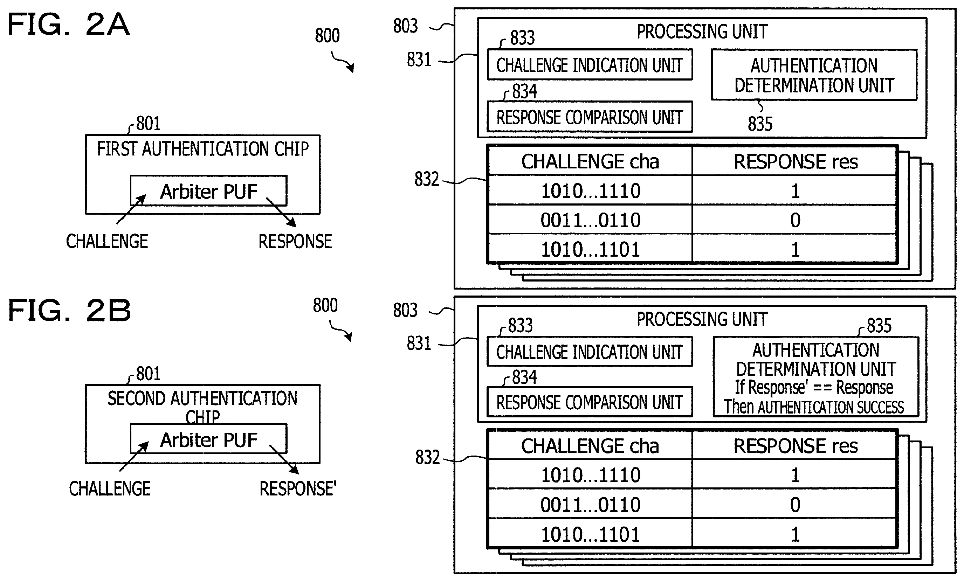

FIG. 2 is a diagram that illustrates an authentication system that uses the arbiter PUF 700. FIG. 2A is a diagram that illustrates registration of challenges and responses, and FIG. 2B is a diagram that illustrates authentication by the challenges and the responses that are registered in FIG. 2A.

An authentication system 800 has a first authentication chip 801, a second authentication chip 802, and an authentication server 803 that is the authentication device. Each of the first authentication chip 801 and the second authentication chip 802 has the arbiter PUF. The first authentication chip 801 is a genuine product, and the second authentication chip 802 is a chip that is not known to be a genuine product or a clone product. The authentication server 803 has a processing unit 831 and an authentication table 832 that is stored in a storage unit, which is a semiconductor memory in one example and not illustrated.

The processing unit 831 has one or plural processors and peripheral circuits thereof. The processing unit 831 integrally controls general actions of the authentication server 803 and is a central processing unit (CPU), for example. The processing unit 831 controls various actions such that various kinds of processing of the authentication server 803 are executed in an appropriate procedure based on programs stored in the storage unit and in accordance with operations of an operating unit, which is not illustrated. The processing unit 831 executes processing based on the programs (driver programs, operating system programs, application programs, and so forth) stored in the storage unit. The processing unit 831 has a challenge indication unit 833, a response comparison unit 834, and an authentication determination unit 835.

First, the authentication system 800 registers the respective challenges and responses of plural genuine products that include the first authentication chip 801 to the authentication table 832 of the authentication server 803. Each of the plural genuine products that include the first authentication chip 801 outputs a specific response res in accordance with the mounted arbiter PUF 700 in a case where the challenge cha[n-1:0] is input. The authentication table 832 stores responses res in accordance with M challenges cha[n-1:0]. As described above, in the authentication system 800, the authentication table 832 stores the challenges cha[n-1:0] and the responses res that correspond to the challenges cha[n-1:0] with respect to each of the plural genuine products that include the first authentication chip 801. The response res that is stored in the authentication table 832 is an expected value of the response to the challenge applied to the genuine product.

In order to authenticate the second authentication chip 802, the challenge indication unit 833 in the authentication system 800 sequentially outputs the M challenges cha[n-1:0] to the second authentication chip 802. Next, the response comparison unit 834 compares the set of responses res that are output from the second authentication chip 802 in accordance with the M challenges cha[n-1:0] with the set of plural responses res that are stored in the authentication table 832. Then, the authentication determination unit 835 compares the set of responses res from the second authentication chip 802 with the set of M responses res that are stored in the authentication table 832 and determines that the second authentication chip 802 is a genuine product in a case where the set of responses res from the second authentication chip 802 match any of the set of M responses res by R or more bits. Further, the authentication determination unit 835 determines that the authentication fails and the second authentication chip 802 is a clone product in a case where the set of responses res from the second authentication chip 802 do not match any of the set of M responses res that are stored in the authentication table 832 by R or more bits.

In the authentication system 800, because the arbiter PUF 700 outputs the specific response in accordance with the challenge, the arbiter PUF 700 may alone realize the authentication function without using a secret key, an encryption function, or the like.

### (Configuration and function of latch PUF)

A description will be made below about a configuration and a function of a latch PUF, which is one of the memory PUFs.

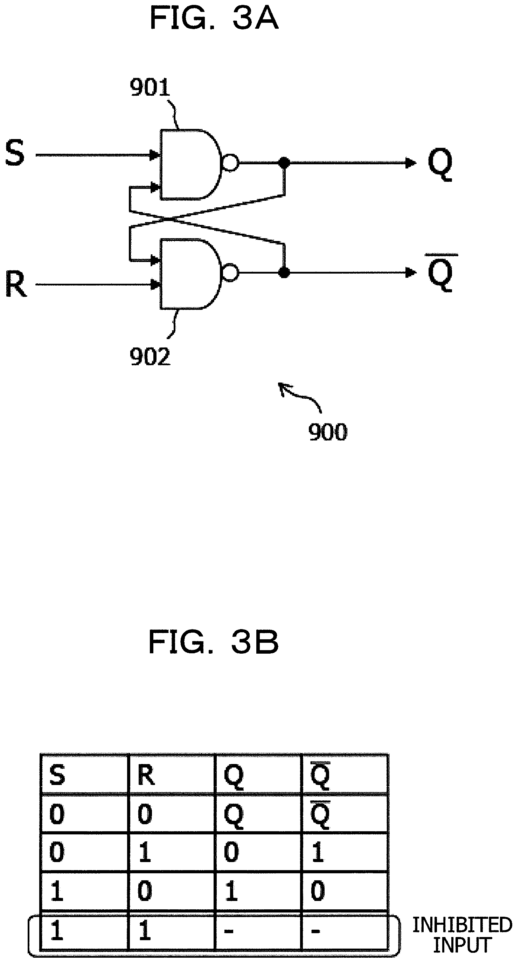

FIG. 3A is a circuit block diagram of an RS latch circuit, and FIG. 3B is a truth table of the RS latch circuit illustrated in FIG. 3A.

An RS latch circuit 900 has a first NAND element 901 and a second NAND element 902. A set signal S is input to one input terminal of the first NAND element 901, and an inverted output signal /Q is input from the second NAND element 902 to the other input terminal of the first NAND element 901. Here, /Q means Q bar, that is, inversion. A reset signal R is input to one input terminal of the second NAND element 902, and an output signal Q is input from the first NAND element 901 to the other input terminal of the second NAND element 902.

The RS latch circuit 900 maintains the output signal Q and the inverted output signal /Q in a case where "0" is input as both of the set signal S and the reset signal R. The RS latch circuit 900 outputs "0" as the output signal Q and outputs "1" as the inverted output signal /Q in a case where "0" is input as the set signal S and "1" is input as the reset signal R. Further, the RS latch circuit 900 outputs "1" as the output signal Q and outputs "0" as the inverted output signal /Q in a case where "1" is input as the set signal S and "0" is input as the reset signal R.

However, in a case where "1" is input as both of the set signal S and the reset signal R, the output signal Q and the inverted output signal /Q, which are fundamentally opposite logics, collide and the RS latch circuit 900 becomes a "metastable" state, which is an unstable state. After the RS latch circuit 900 becomes metastable, the output signal Q and the inverted output signal /Q become stable with either one of "0" and "1". In a case where the delay time of the first NAND element 901 and the delay time of the second NAND element 902 are almost the same, the probability that the output signal Q becomes "0" and the probability that the output signal Q becomes "1" are almost equivalent. However, because the first NAND element 901 and the second NAND element 902 are different in drive capability, the wire widths of wires that connect terminals, and so forth, the signal states of the output signal Q and the inverted output signal /Q at a time after the metastable state are different for each of the RS latch circuits 900. For example, in a case where the drive capability of the first NAND element 901 and the drive capability of the second NAND element 902 are different, it is highly possible that the RS latch circuit 900 continuously outputs either one of "0" and "1" as the signal states of the output signal Q and the inverted output signal /Q after the metastable state. The latch PUF uses a characteristic that in a case where "1" is input as both of the set signal S and the resent signal R in the RS latch circuit 900, the signal states of the circuit output signal Q and the inverted output signal /Q of the RS latch circuit 900 are different for each RS latch circuit.

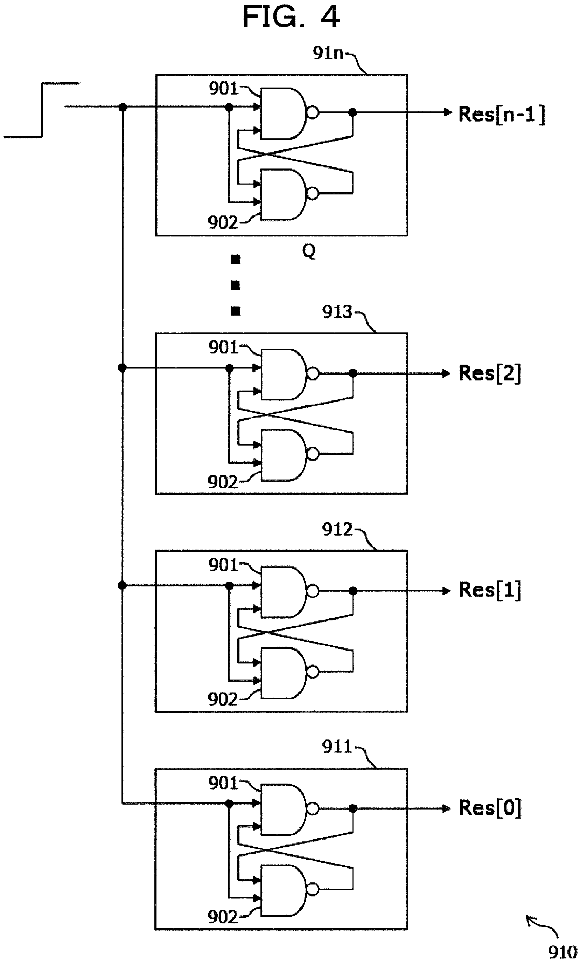

FIG. 4 is a circuit block diagram of the latch PUF.

A latch PUF 910 has n RS latch circuits 911 to 91n that have the same configuration. Each of the n RS latch circuits 911 to 91n is different from the RS latch circuit 900 in that one input terminal of the first NAND element 901 and one input terminal of the second NAND element 902 are short-circuited and an output signal of the second NAND element 902 is not output to the outside. Each of the n RS latch circuits 911 to 91n maintains an output signal in a case where "0" is input as an input signal and outputs either one of "0" and "1" in a case where "1" is input as the input signal. That is, the latch PUF 910 outputs a response res[n-1:0] in a case where "1" is input as the input signal. The response res[n-1:0] of the latch PUF 910 is different for each chip on which the latch PUF 910 is mounted, and the latch PUF 910 may thus output the response res[n-1:0] as identification information of the chip on which the latch PUF 910 is mounted.

However, because the latch PUF 910 only outputs the single response res[n-1:0] for the single input signal "1", it is not easy to output plural responses res[n-1:0] in response to plural challenges. Thus, an object of one embodiment is to provide an electronic circuit that enables an authentication function which uses a latch PUF with plural challenges and responses to the challenges.

### (Configuration of electronic apparatus according to the embodiment)

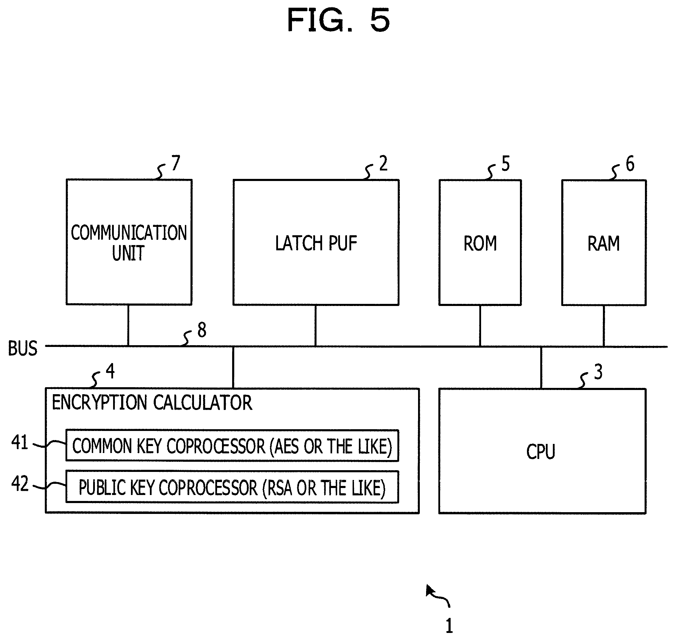

FIG. 5 is a circuit block diagram of an electronic apparatus according to the embodiment.

An electronic apparatus 1 has a latch PUF 2, a calculation processing device 3, an encryption calculator 4, a read only memory (ROM) 5, a random access memory (RAM) 6, and a communication unit 7. The latch PUF 2, the calculation processing device 3, the encryption calculator 4, the ROM 5, the RAM 6, and the communication unit 7 are connected with each other via a bus 8. The electronic apparatus 1 uses the latch PUF 2 to generate plural responses to plural challenges and thereby realizes an authentication function. Further, the electronic apparatus 1 may use the latch PUF 2 to generate an encryption key that is used for encryption calculation in the encryption calculator 4.

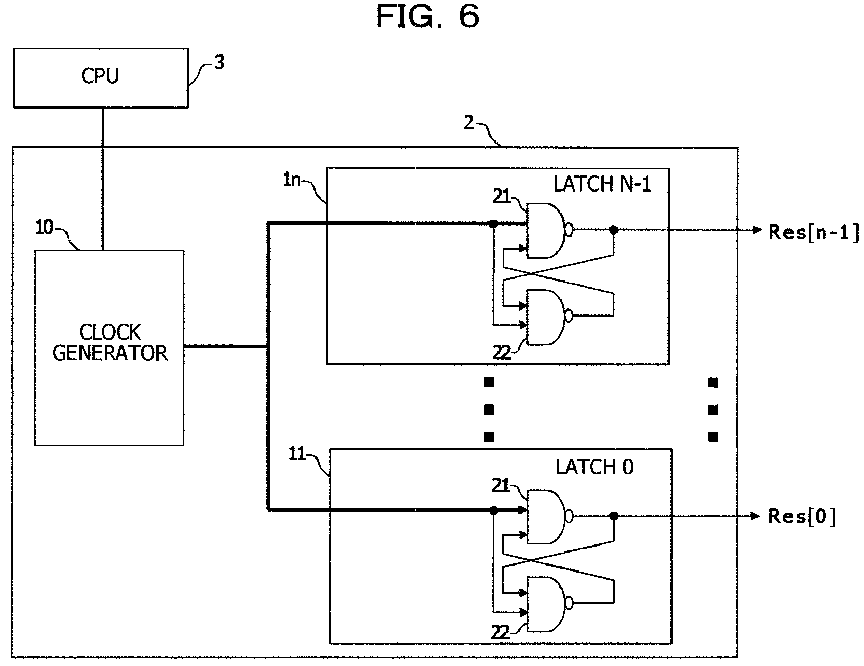

FIG. 6 is an internal circuit block diagram of the latch PUF 2.

The latch PUF 2 has a clock generator 10 and n RS latch circuits 11 to 1n. The clock generator 10 generates a clock signal with a frequency that corresponds to a clock control signal CKcnt input from the calculation processing device 3. Here, the clock generator 10 receives an input of the clock control signal CKcnt from the calculation processing device 3 but may receive an input of the clock control signal CKcnt from another device than the calculation processing device 3. The clock generator 10 may generate the clock signal at a prescribed timing. The clock generator 10 is capable of generating clock signals at different frequencies in accordance with the input clock control signal CKcnt. For example, the clock generator 10 is capable of generating clock signals with 2000 kinds of different frequencies for each 0.1 MHz from 1 MHz to 200 MHz.

Each of the n RS latch circuits 11 to 1n has a first NAND element 21 and a second NAND element 22. The n RS latch circuits 11 to 1n respectively have similar configurations to the n RS latch circuits 911 to 91n, which are described with reference to FIG. 4. That is, in each of the n RS latch circuits 11 to 1n, an input signal is input to one input terminals of the first NAND element 21 and the second NAND element 22. Further, an output signal of the second NAND element 22 is input to the other input terminal of the first NAND element 21, and an output signal of the first NAND element 21 is input to the other input terminal of the second NAND element 22. Each of the n RS latch circuits 11 to 1n outputs the output signal of the first NAND element 21 as a response res[n-1].

The latch PUF 2 generates the responses to the challenges based on knowledge found by the present inventors that the frequency of the clock signals input to an input terminal of the RS latch circuit is changed and the output signal of the RS latch circuit may thereby be changed. This knowledge has revealed that the output signal of each of the n RS latch circuits 11 to 1n may change in a case where the frequency of the clock signal input from the clock generator 10 is changed. For example, it is assumed that the output signal differs between a case where the clock signal at a first frequency is input to any of the n RS latch circuits 11 to 1n and a case where the clock signal at a second frequency that is different from the first frequency is input. In this case, the response res[n-1:0] in a case where the clock generator 10 generates the clock signal whose frequency is the first frequency is different from the response res[n-1:0] in a case where the clock generator 10 generates the clock signal at the second frequency. This enables the clock control signal CKcnt that indicates the frequency of the clock signal generated by the clock generator 10 to serve as the challenge and the output signals of the RS latch circuit 11 to 1n to serve as the responses res[n-1:0]. For example, in a case where the clock generator 10 is capable of generating 2000 kinds of clock signals at different frequencies, the latch PUF 2 may generate 2000 kinds of n-bit responses to the 2000 kinds of challenges.

The calculation processing device 3 is also referred to as a central processing unit (CPU) and controls actions of configuration elements of the electronic apparatus 1. For example, the calculation processing device 3 controls the clock generator 10 to generate the clock signal at the frequency indicated by the clock control signal CKcnt in a case where the clock control signal CKcnt that indicates the frequency of the clock signal generated by the clock generator 10 is input. Further, the calculation processing device 3 outputs, via the communication unit 7, the responses res[n-1:0] that are output from the n RS latch circuits 11 to 1n in response to the clock signal at the frequency indicated by the clock control signal CKcnt.

The encryption calculator 4 has a common key coprocessor 41 and a public key coprocessor 42 and executes encryption processing of various kinds of information and decryption processing of encrypted data. The common key coprocessor 41 executes encryption and decryption processing by using common key encryption systems such as DES and AES. The public key coprocessor 42 executes encryption and decryption processing by using public key encryption systems such as RSA, the EIGamal system, the Rabin system, and elliptic curve cryptography. The ROM 5 is a non-volatile memory that stores control programs executed by the calculation processing device 3 and various parameters that the encryption calculator 4 uses for the encryption processing and the decryption processing. The RAM 6 is a volatile memory that is used as a working storage area while the calculation processing device 3 and the encryption calculator 4 execute various kinds of processing.

The communication unit 7 outputs the clock control signal CKcnt input from another electronic apparatus such as a server to the calculation processing device 3 and outputs the response res[n-1:0] input from the latch PUF 2 to another electronic apparatus such as a server. Further, the communication unit 7 transmits and receives encrypted signals that indicate various data between the communication unit 7 and another electronic apparatus. When the communication unit 7 receives encrypted signals, the calculation processing device 3 uses the encryption calculator 4 to perform decryption processing of the received signals. Further, the communication unit 7 transmits signals to which the calculation processing device 3 uses the encryption calculator 4 to apply encryption processing.

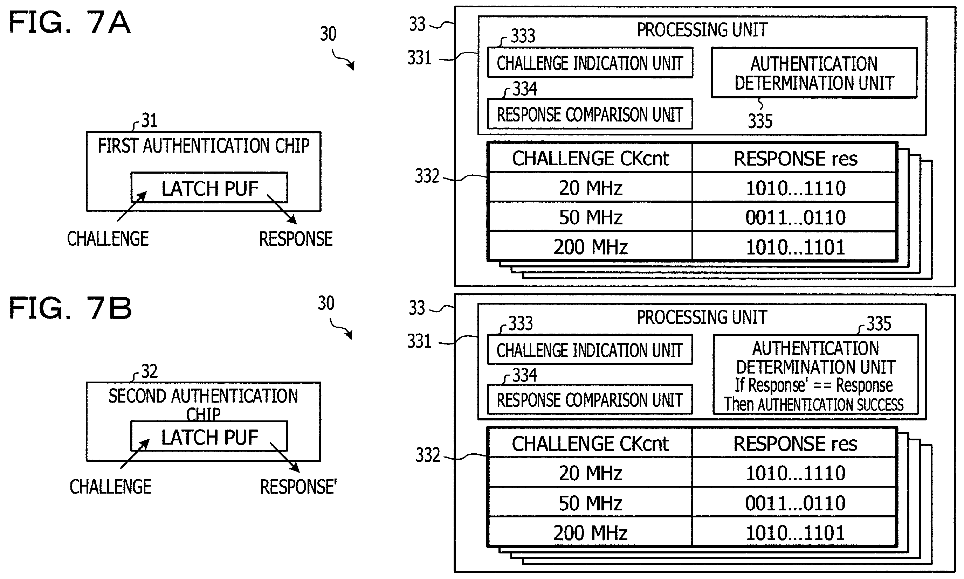

FIG. 7 is a diagram that illustrates an authentication system that uses the electronic apparatus 1. FIG. 7A is a diagram that illustrates registration of the challenges and the responses, and FIG. 7B is a diagram that illustrates authentication by the challenges and the responses that are registered in FIG. 7A.

An authentication system 30 has a first authentication chip 31, a second authentication chip 32, and an authentication server 33 that is the authentication device. Each of the first authentication chip 31 and the second authentication chip 32 has the latch PUF. The first authentication chip 31 is a genuine product that has the same functions and configuration as the electronic apparatus 1, and the second authentication chip 32 is a chip that is not known to be a genuine product or a clone product. The authentication server 33 has a processing unit 331 and an authentication table 332.

The processing unit 331 has one or plural processors and peripheral circuits thereof. The processing unit 331 integrally controls general actions of the authentication server 33 and is a central processing unit (CPU), for example. The processing unit 331 controls various actions such that various kinds of processing of the authentication server 33 are executed in an appropriate procedure based on programs stored in the storage unit and in accordance with operations of an operating unit, which is not illustrated. The processing unit 331 executes processing based on the programs (driver programs, operating system programs, application programs, and so forth) stored in the storage unit. The processing unit 331 has a challenge indication unit 333, a response comparison unit 334, and an authentication determination unit 335.

First, the authentication system 30 registers the respective challenges and responses of plural genuine products that include the first authentication chip 31 to the authentication table 332 of the authentication server 33. Each of the plural genuine products that include the first authentication chip 31 outputs a specific response res[n-1:0] in a case where the clock control signal CKcnt that indicates the frequency of the clock signal generated by the clock generator 10 is input. In one example, the authentication table 332 stores, as the challenges, the clock control signals CKcnt that indicate that the clock generator 10 generates the clock signals whose frequencies are 20 MHz, 50 MHz, and 200 MHz. Further, the authentication table 332 stores the responses res[n-1:0] in accordance with M challenges that correspond to the clock control signals CKcnt. FIG. 7 indicates three responses res. However, it is preferable that more responses res are present, and M is preferably equivalent to or greater than 128, for example. As described above, in the authentication system 30, the authentication table 332 stores the clock control signals CKcnt as the challenges and the corresponding responses res[n-1:0] with respect to each of the plural genuine products that include the first authentication chip 31. The response res[n-1:0] that is stored in the authentication table 332 is an expected value of the response to the challenge applied to the genuine product.

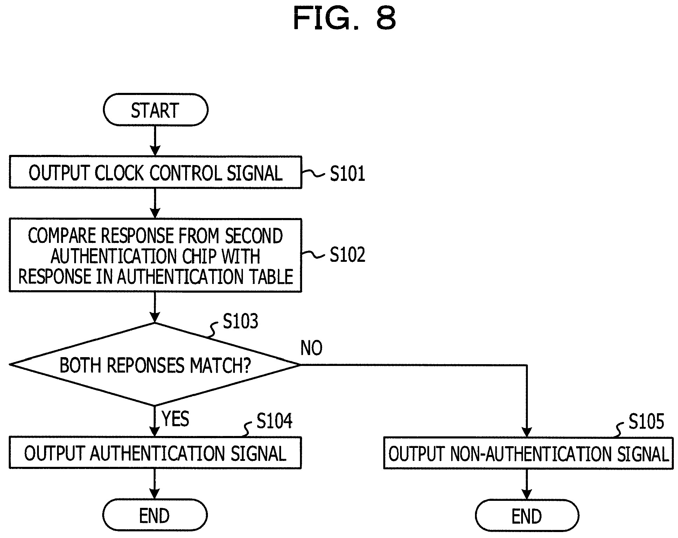

FIG. 8 is a flowchart of authentication processing by the authentication system 30.

First, in order to authenticate the second authentication chip 32, the challenge indication unit 333 sequentially outputs the clock control signals CKcnt that indicate M frequencies, which are the challenges, to the second authentication chip 32 (S101). Next, the response comparison unit 334 compares the set of responses res[n-1:0] that are output from the second authentication chip 32 in accordance with M clock control signals CKcnt with the set of responses res[n-1:0] in the authentication table 332 (S102). Next, the authentication determination unit 335 determines that the second authentication chip 32 is a genuine product in a case where the set of responses res[n-1:0] from the second authentication chip 32 match any of the set of M responses res[n-1:0] in the authentication table 332 by R or more bits (S103). For example, in a case where the second authentication chip 32 outputs the set of responses res[n-1:0], which match the responses res[n-1:0] of the first authentication chip 31 by R or more bits, to the M clock control signals CKcnt, the second authentication chip 32 is the same as the first authentication chip 31 and is thus authenticated as a genuine product. In a case where the authentication determination unit 335 determines that the second authentication chip 32 is a genuine product, the authentication determination unit 335 outputs an authentication signal that indicates that the second authentication chip 32 is determined as a genuine product (S104). The authentication determination unit 335 determines that the authentication fails and the second authentication chip 32 is a clone product in a case where the set of responses res[n-1:0] from the second authentication chip 32 do not match any of the set of M responses res[n-1:0] in the authentication table 332 by R or more bits (S103). In a case where the authentication determination unit 335 determines that the second authentication chip 32 is a clone product, the authentication determination unit 335 outputs a non-authentication signal that indicates that the second authentication chip 32 is determined as a clone product (S105).

### (Configuration of latch PUF according to a second embodiment)

The electronic apparatus 1 may have a latch PUF according to a second embodiment instead of the latch PUF 2.

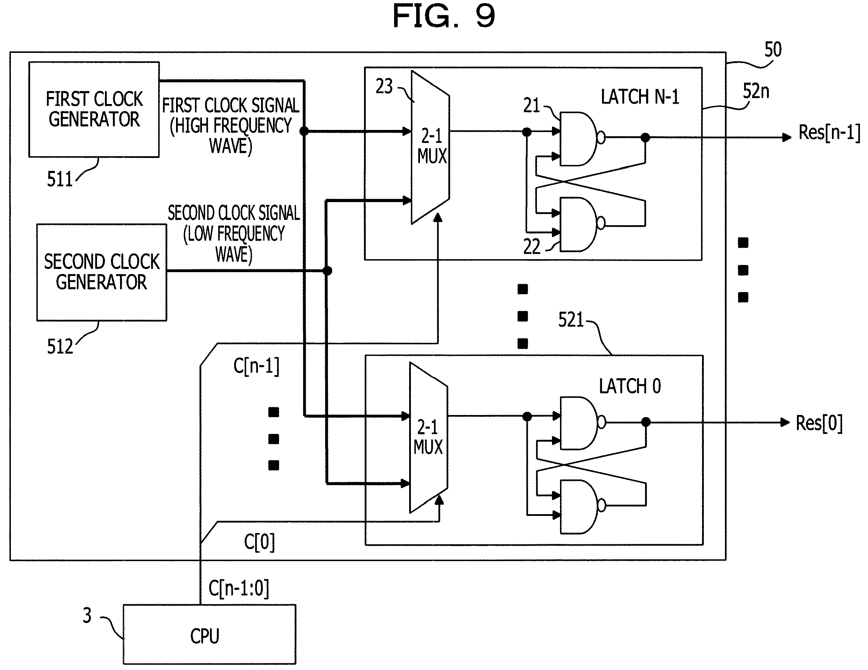

FIG. 9 is a circuit block diagram of the latch PUF according to the second embodiment.

The latch PUF 50 has a first clock generator 511, a second clock generator 512, and n selection RS latches 521 to 52n. The first clock generator 511 generates a first clock signal whose frequency is a first frequency, and the second clock generator 512 generates a second clock signal whose frequency is a second frequency which is lower than the first frequency. The n selection RS latches 521 to 52n are different from the RS latch circuits 11 to 1n in that each of the n selection RS latches 521 to 52n has a multiplexor 23. Each of the multiplexors 23 outputs either one of the first clock signal and the second clock signal to one input terminals of the first NAND element 21 and the second NAND element 22 in accordance with the bit that corresponds to a challenge C[n-1:0]. The challenge C[n-1:0] is input to each of the multiplexors 23 from the outside of the electronic apparatus 1 via the communication unit 7 and the calculation processing device 3. The multiplexor 23 outputs the first clock signal in a case where the bit that corresponds to the challenge C[n-1:0] is "0" and outputs the second clock signal in a case where the bit that corresponds to the challenge C[n-1:0] is "1".

Similarly to the latch PUF 2, the latch PUF 50 generates the responses to the challenges based on the knowledge that the frequency of the clock signal input to the input terminal of the RS latch circuit is changed and the output signal of the RS latch circuit may thereby be changed. As indicated by this knowledge, the output signal of each of the n selection RS latches 521 to 52n may change between a case where the first clock signal is input from the first clock generator 511 and a case where the second clock signal is input from the second clock generator 512. Accordingly, each of the selection RS latches 521 to 52n may use, as the challenge, any of 2ⁿ challenges C[n-1:0] that indicate which of the first clock signal and the second clock signal is selected. Each of the selection RS latches 521 to 52n is enabled to output 2ⁿ responses res[n-1:0] in accordance with the input 2ⁿ challenges C[n-1:0].

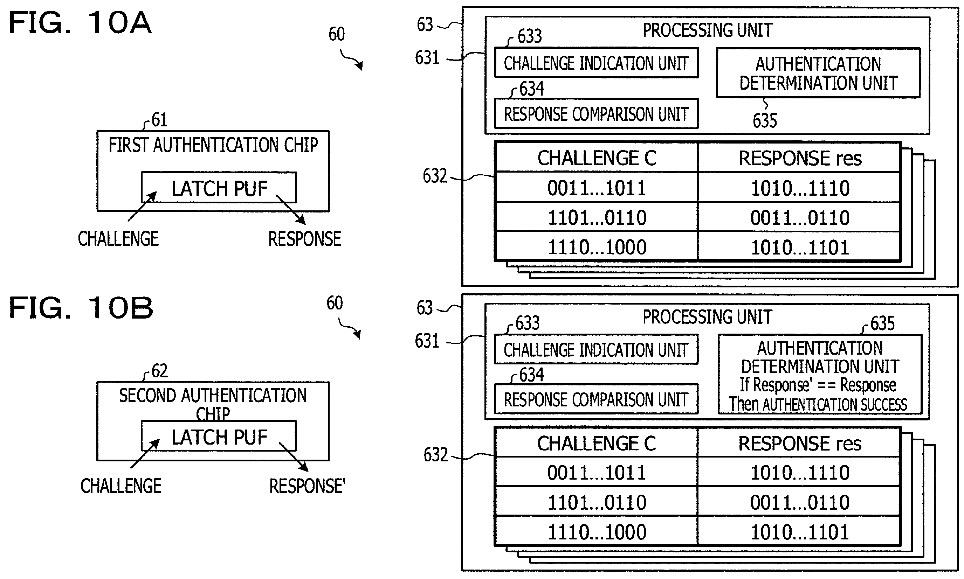

FIG. 10 is a diagram that illustrates an authentication system that uses an electronic apparatus on which the latch PUF 50 is mounted. FIG. 10A is a diagram that illustrates registration of the challenges and the responses, and FIG. 10B is a diagram that illustrates authentication by the challenges and the responses that are registered in FIG. 10A.

An authentication system 60 has a first authentication chip 61, a second authentication chip 62, and an authentication server 63 that is the authentication device. Each of the first authentication chip 61 and the second authentication chip 62 has the latch PUF 50. The first authentication chip 61 is a genuine product on which the latch PUF 50 is mounted, and the second authentication chip 62 is a chip that is not known to be a genuine product or a clone product. The authentication server 63 has a processing unit 631 and an authentication table 632.

The processing unit 631 has one or plural processors and peripheral circuits thereof. The processing unit 631 integrally controls general actions of the authentication server 63 and is a central processing unit (CPU), for example. The processing unit 631 controls various actions such that various kinds of processing of the authentication server 63 are executed in an appropriate procedure based on programs stored in a storage unit and in accordance with operations of an operating unit, which is not illustrated. The processing unit 631 executes processing based on the programs (driver programs, operating system programs, application programs, and so forth) stored in the storage unit. The processing unit 631 has a challenge indication unit 633, a response comparison unit 634, and an authentication determination unit 635.

First, the authentication system 60 registers the respective challenges and responses of plural genuine products that include the first authentication chip 61 to the authentication table 632 of the authentication server 63. Each of the plural genuine products that include the first authentication chip 61 outputs a specific response res[n-1:0] in a case where any of the challenges C[n-1:0] is input. In one example, the authentication table 632 stores any M challenges C[n-1:0] among the 2ⁿ challenges C[n-1:0]. Further, the authentication table 632 stores M responses res[n-1:0] that correspond to the M challenges C[n-1:0]. As described above, in the authentication system 60, the authentication table 632 stores the M challenges C[n-1:0] and the responses res[n-1:0] that correspond to the challenges C[n-1:0] with respect to each of the plural genuine products that include the first authentication chip 61. The response res[n-1:0] that is stored in the authentication table 632 is an expected value of the response to the challenge C[n-1:0] applied to the genuine product.

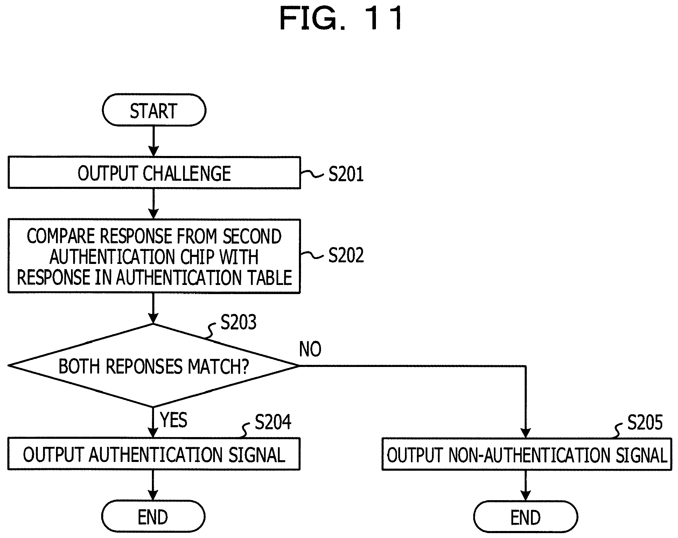

FIG. 11 is a flowchart of authentication processing by the authentication system 60.

First, in order to authenticate the second authentication chip 62, the challenge indication unit 633 sequentially outputs the M challenges C[n-1:0] that are stored in the authentication table 632 to the second authentication chip 62 (S201). Next, the response comparison unit 634 compares the set of responses res[n-1:0] that are output from the second authentication chip 62 in accordance with the challenges C[n-1:0] with the set of responses res[n-1:0] in the authentication table 632 (S202). Next, the authentication determination unit 635 determines that the second authentication chip 62 is a genuine product in a case where the set of responses res[n-1:0] from the second authentication chip 62 match any of the set of M responses res[n-1:0] in the authentication table 632 by R or more bits (S203). For example, in a case where the second authentication chip 62 outputs the same set of responses res[n-1:0] as the first authentication chip 61 to the M challenges C[n-1:0], the second authentication chip 62 is the same as the first authentication chip 61 and is thus authenticated as a genuine product. In a case where the authentication determination unit 635 determines that the second authentication chip 62 is a genuine product, the authentication determination unit 635 outputs an authentication signal that indicates that the second authentication chip 62 is determined as a genuine product (S204). The authentication determination unit 635 determines that the authentication fails and the second authentication chip 62 is a clone product in a case where the set of responses res[n-1:0] from the second authentication chip 62 do not match any of the set of M responses res[n-1:0] in the authentication table 632 by R or more bits (S203). In a case where the authentication determination unit 635 determines that the second authentication chip 62 is a clone product, the authentication determination unit 635 outputs a non-authentication signal that indicates that the second authentication chip 62 is determined as a clone product (S205).

### (Work and effect of latch PUF according to the embodiments)

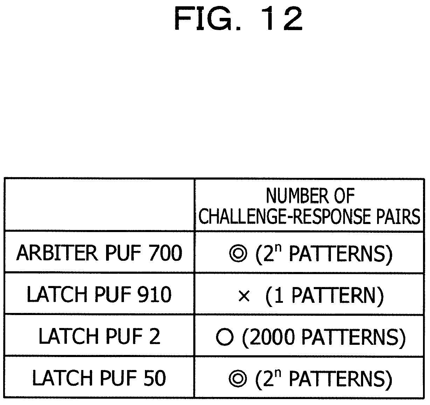

The latch PUF according to the embodiments is provided based on knowledge that the frequency of the clock signal input to an input terminal of the RS latch circuit is changed and the output signal of the RS latch circuit may thereby be changed. Based on this knowledge, the latch PUF according to the embodiments functions as an electronic circuit that enables an authentication function which uses a latch PUF with plural challenges and responses to the challenges. FIG. 12 is a diagram that illustrates examples of the numbers of challenge-response pairs of the arbiter PUF 700, the latch PUF 910, the latch PUF 2, and the latch PUF 50.

The latch PUF 2 may generate challenges of the number of the clock signals that the clock generator 10 is capable of generating. For example, the latch PUF 2 may generate 2000 challenges in a case where the clock generator 10 is capable of generating clock signals with 2000 kinds of frequencies for each 0.1 MHz from 1 MHz to 200 MHz. The latch PUF 50 may generate 2ⁿ challenges in a case where the latch PUF 50 has the n selection RS latches 521 to 52n.

### (Modification examples of latch PUF according to the embodiments)

In the latch PUF 2, the clock signal generated by the clock generator 10 is input to the n RS latch circuits 11 to 1n. However, a configuration is possible in which the clock signal is input from any one of plural clock generators to each of the n RS latch circuits 11 to 1n. For example, the latch PUF may have a first latch group that has plural RS latch circuits to which the clock signal is input from a first clock generator and a second latch group that has plural RS latch circuits to which the clock signal is input from a second clock generator.

Further, in the latch PUF 50, the clock signals from the first clock generator 511 and the second clock generator 512 are selected by the multiplexor 23. However, a configuration is possible in which clock signals from three or more clock generators are selected by a multiplexor. For example, a third clock generator that generates a third clock signal with a frequency which is lower than the frequency of the first clock signal and higher than the frequency of the second clock signal may be arranged in addition to the first clock generator 511 and the second clock generator 512. A latch PUF in a configuration in which the clock signals from the three clock generators are selected by the multiplexor may generate 3ⁿ challenges. Further, a latch PUF in a configuration in which clock signals from X clock generators are selected by the multiplexor may generate Xⁿ challenges.

Further, in the authentication systems 30 and 60, the authentication device that authenticates an authentication chip is indicated by a single authentication server. However, functions of the authentication server may be dispersedly arranged to plural devices. For example, a processing unit that executes authentication processing may be stored in a device that is arranged adjacently to the authentication chip, and an authentication table may be stored in a device that is separately arranged from the authentication chip. In this case, the processing unit that executes the authentication processing and the authentication table are connected together via a line network such as the Internet.

Further, in the described embodiments, the calculation processing device 3 controls the frequency of the clock signal that is input to RS latches of the latch PUF 2 and the latch PUF 50. However, a dedicated control circuit that controls the frequency of the clock signal input to the RS latch may be arranged.

### REFERENCE SIGNS LIST

- 1: electronic apparatus (electronic circuit)
- 2, 50: latch PUF
- 3: calculation processing device (control circuit)
- 10: clock generator
- 11 to 1n: RS latch circuit
- 21: first NAND element
- 22: second NAND element
- 23: multiplexor
- 30: authentication system
- 31: first authentication chip
- 32: second authentication chip
- 33: authentication server (authentication device)
- 331: processing unit
- 332: authentication table
- 333: challenge indication unit
- 334: response comparison unit
- 335: authentication determination unit
- 511: first clock generator
- 512: second clock generator
- 521 to 52n: selection RS latch
- 60: authentication system
- 61: first authentication chip
- 62: second authentication chip
- 63: authentication server (authentication device)
- 631: processing unit
- 632: authentication table
- 633: challenge indication unit
- 634: response comparison unit
- 635: authentication determination unit

## Claims

1. An electronic circuit comprising:
a clock generator that generates a plurality of clock signals whose frequencies are mutually different;
a plurality of RS latch circuits whose output signals change in accordance with the frequencies of the plurality of clock signals that are individually input from the clock generator; and
a control circuit that controls the frequencies of the plurality of clock signals which are input from the clock generator to each of the plurality of RS latch circuits.

2. The electronic circuit according to claim 1, wherein
the control circuit changes the frequencies of the plurality of clock signals that are generated by the clock generator in accordance with first data which is input, and
each of the plurality of RS latch circuits outputs, as the output signals, second data in a case where each of the clock signals in accordance with the first data is input.

3. The electronic circuit according to claim 1, wherein
the control circuit has a selection circuit,
the selection circuit selects any one of the plurality of clock signals which are generated by the clock generator in accordance with first data which is input and whose frequencies are mutually different, and outputs the selected clock signals to one of the plurality of RS latch circuits, and
each of the plurality of RS latch circuits outputs, as the output signals, second data in a case where each of the clock signals that is selected in accordance with the first data is input.

4. An authentication system comprising:
an electronic apparatus including:
a clock generator that generates a plurality of clock signals whose frequencies are mutually different;
a plurality of RS latch circuits whose output signals change in accordance with the frequencies of the plurality of clock signals that are individually input from the clock generator; and
a control circuit that controls the frequencies of the plurality of clock signals which are input from the clock generator to each of the plurality of RS latch circuits, according to a designation signal for designating the frequencies of the plurality of clock signals; and
an authentication device including:
an indication unit that outputs the designation signal;
a storing unit that stores, for each of the frequencies designated by the designation signal, expected values of the output signals from the electronic apparatus;
a comparison unit that compares the output signals with the expected values; and
a determination unit that outputs an authentication result which indicates whether the electronic apparatus is determined as a genuine product based on a result of a comparison.

5. An authentication method executed by a computer, the authentication method comprising:
outputting a designation signal to an electronic apparatus to be an authentication target, the designation signal designating frequencies of a plurality of clock signals which are generated by a clock generator in the electronic apparatus, and the frequencies being mutually different;
receiving output signals from electronic apparatus, the output signals being generated by a plurality of RS latch circuits in the electronic apparatus, and changing in accordance with the frequencies of the plurality of clock signals that are individually input from the clock generator to the plurality of RS latch circuits;
comparing the output signals with expected values of the output signals from the electronic apparatus for each of the frequencies designated by the designation signal; and
outputting an authentication result which indicates whether the electronic apparatus is determined as a genuine product based on a result of a comparison.
